(19) **Europäisches Patentamt / European Patent Office / Office européen des brevets**

(11) **EP 3 694 188 B1**

(12) **EUROPEAN PATENT SPECIFICATION**

(45) Date of publication and mention
of the grant of the patent:
**08.02.2023 Bulletin 2023/06**

(21) Application number: **19190417.6**

(22) Date of filing: **07.08.2019**

(51) International Patent Classification (IPC):
**H04L 9/40** *(2022.01)* **G06Q 30/02** *(2012.01)*
**H04L 61/4511** *(2022.01)*

(52) Cooperative Patent Classification (CPC):
**H04L 63/10; H04L 61/4511; H04L 63/0236;**
G06Q 30/0257; G06Q 30/0267; H04L 61/59

(54) **SYSTEM AND METHOD OF BLOCKING ADVERTISING ON COMPUTING DEVICES**

SYSTEM UND VERFAHREN ZUM BLOCKIEREN VON WERBUNG AUF
RECHENVORRICHTUNGEN

SYSTÈME ET PROCÉDÉ DE BLOCAGE DE PUBLICITÉ SUR DES DISPOSITIFS INFORMATIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.02.2019 RU 2019103363**
**31.05.2019 US 201916427903**

(43) Date of publication of application:
**12.08.2020 Bulletin 2020/33**

(73) Proprietor: **AO Kaspersky Lab**
**Moscow 125212 (RU)**

(72) Inventor: **KOMISSAROV, Alexey P.**
**125212 MOSCOW (RU)**

(74) Representative: **Chimini, Francesco**
**Jacobacci & Partners S.p.A.**
**Piazza della Vittoria 11**
**25122 Brescia (IT)**

(56) References cited:
**KR-A- 20180 040 390    US-A1- 2008 209 057**
**US-A1- 2016 099 961**

## Description

**FIELD OF TECHNOLOGY**

The present disclosure relates to the field of blocking information, e.g., advertisement, on computing devices, e.g., mobile computing devices, to improve user experience, more specifically blocking advertising messages.

**BACKGROUND**

At present, mobile computing devices (such as smartphones and tablets) are used by people every day to handle all possible tasks or for entertainment. A multitude of all possible applications exists for communicating, time scheduling, viewing Internet pages, controlling one's bank account, and so forth. Some of these applications are distributed for a price, others are free of charge.

The applications which are distributed free of charge are characterized by the presence of advertising, which is displayed during the use of the application. In this way, the developers monetize the results of their work. However, often such advertising is overly intrusive or may even be harmful to the user or his/her device, for example, by displaying links to malicious files or sites.

One method for protecting the computing devices of the users against advertising is blocking advertisements to be displayed to users using black lists of forbidden resources and intercepting DNS (Domain Name System) requests. However, for devices under the control of the iOS operating system, such methods involve blocking the connections established by the advertising modules of the applications, making use of VPNs, or proxy servers. Moreover, such methods are power hungry, and may also prove to be uneconomical, in terms of the payment for a volume of data transmitted over a network. Examples of such methods can be found in documents US 2008/209057 A1, KR 2018 0040390 A and US 2016/099961 A1

Hence, there is a need for an effective way of protecting a user of a mobile computing device against advertisments.

**SUMMARY**

The present invention is defined in the independent claims. Preferred embodiments are defined in the dependent claims.

Aspects of the disclosure relate to the field of user experience and advertisements, more specifically to systems and methods for blocking information, e.g., advertisements, from being received on a computing device, e.g., for blocking advertising on computing devices.

In one example, a method is implemented in a computer comprising a hardware processor, the method comprising: intercepting a Domain Name System (DNS) request, the intercepted DNS request being associated with the information being blocked from the computing device, obtaining a set of rules for a transmission of the intercepted DNS request, determining, whether at least one rule of the obtained set of rules subscribes to a blocking of the transmission of the intercepted DNS request, and blocking the transmission of the intercepted DNS request when at least on rule of the set of rules subscribes to the blocking of the transmission of the intercepted DNS request, wherein the blocking of the transmission of the intercepted DNS request blocks the information from being received on the computing device.

According to one example of the disclosure, a system is provided for blocking information from being received on a computing device, the system comprising a hardware processor configured to: intercept a Domain Name System (DNS) request, the intercepted DNS request being associated with the information being blocked from the computing device, obtain a set of rules for a transmission of the intercepted DNS request, determine, whether at least one rule of the obtained set of rules subscribes to a blocking of the transmission of the intercepted DNS request, and block the transmission of the intercepted DNS request when at least on rule of the set of rules subscribes to the blocking of the transmission of the intercepted DNS request, wherein the blocking of the transmission of the intercepted DNS request blocks the information from being received on the computing device.

In one example, the set of rules is obtained based on at least one of: one or more Universal Resource Locators (URLs) in the intercepted DNS request, and information obtained about the application making the DNS request.

In one example, the obtaining of the set of rules comprises: selecting the set of rules from a database based on the one or more URLs in the intercepted DNS request, and the information about the application making the DNS request.

In one example, the obtaining of the set of rules further comprises: estimating a probability of the intercepted DNS request being a DNS request that was initiated by one or more actions of a user.

In one example, the obtaining of the set of rules further comprises: estimating a probability of the intercepted DNS request having a characteristic of a DNS request made for a subsequent downloading of information from a remote server.

In one example, the interception of the DNS request includes at least one of: an identification of an application making the DNS request, and obtaining information about one or more Universal Resource Locators (URLs) from the DNS request.

In one example, the interception of the DNS request is performed using a DNS proxy provider.

The blocking advertising on computing devices in accordance with the teachings of the present disclosure improves user experience with the device and applications accessed via the device. The improvement is achieved: by intercepting a DNS request that is associated with the information being blocked from the computing device, obtaining a set of rules for a transmission of the intercepted DNS request, determining, whether at least one rule of the obtained set of rules subscribes to a blocking of the transmission of the intercepted DNS request, and blocking the transmission of the intercepted DNS request when at least on rule of the set of rules subscribes to the blocking of the transmission of the intercepted DNS request.

## BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.

Fig. 1 is a block diagram illustrating an exemplary system for blocking information, e.g., advertising, on computing devices.
Fig. 2 is a flow diagram illustrating an exemplary method for blocking information, e.g., advertising, on computing devices.
Fig. 3 presents an example of a general-purpose computer system on which aspects of the present disclosure can be implemented.

## DETAILED DESCRIPTION

Exemplary aspects are described herein in the context of a system, method, and a computer program for blocking information, e.g., advertising, on computing devices. Those of ordinary skill in the art will realize that the following description is illustrative only and is not intended to be in any way limiting. Other aspects will readily suggest themselves to those skilled in the art having the benefit of the disclosure. Reference will now be made in detail to implementations of the example aspects as illustrated in the accompanying drawings. The same reference indicators will be used to the extent possible throughout the drawings and the following description to refer to the same or like items.

In order to present the teachings of the present disclosure with clarity, a number of terms and concepts, as used in describing various aspects of the disclosure, are defined herein.

DNS Proxy Provider is an application extension for the iOS operating system, realized by a class of NEDNSProxyProvider. When this extension is present, the DNS requests from applications containing may be intercepted. The intercepted DNS request contains a Universal Resource Locator (URL). Then, the domain name of the server and the IP address for which the DNS request is made is determined. In addition, the extension may be used to determine the source of the request - i.e., the application making the request. In particular, the identifier of the application making the request, e.g., the name or a unique identifier of the application, may be determined.

Advertising is information propagated by any method, in any form, and with the use of any device, addressed to an undefined group of persons and aimed at: drawing attention to the object of the advertising, forming or maintaining interest in the object of the advertising, and promoting the object of the advertising in the marketplace.

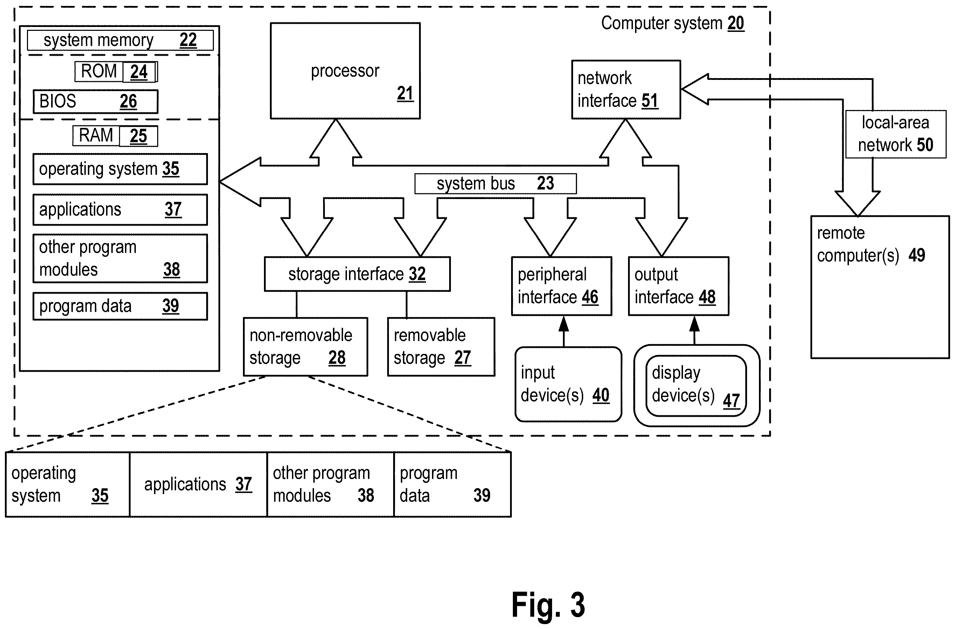

In one example, a system for blocking unwanted information, e.g.., for blocking advertising, on computing devices in accordance with the teachings of the present disclosure includes real-world devices, systems, components, and groups of components realized with the use of hardware such as integrated microcircuits (application-specific integrated circuit, ASIC) or field-programmable gate arrays (FPGA), or, for example, in the form of a combination of software and hardware such as a microprocessor system and set of program instructions, and also on neurosynaptic chips. The functionality of such system modules may be realized solely by hardware, and also in the form of a combination, where some of the functionality of the system modules is realized by software, and some by hardware. In certain examples, some of the modules or all of the modules may be executed on the processor of a general-purpose computer (such as the one shown in **Fig. 3).** Furthermore, components of the system may be realized either within a single computing device or spread out among several interconnected computing devices.

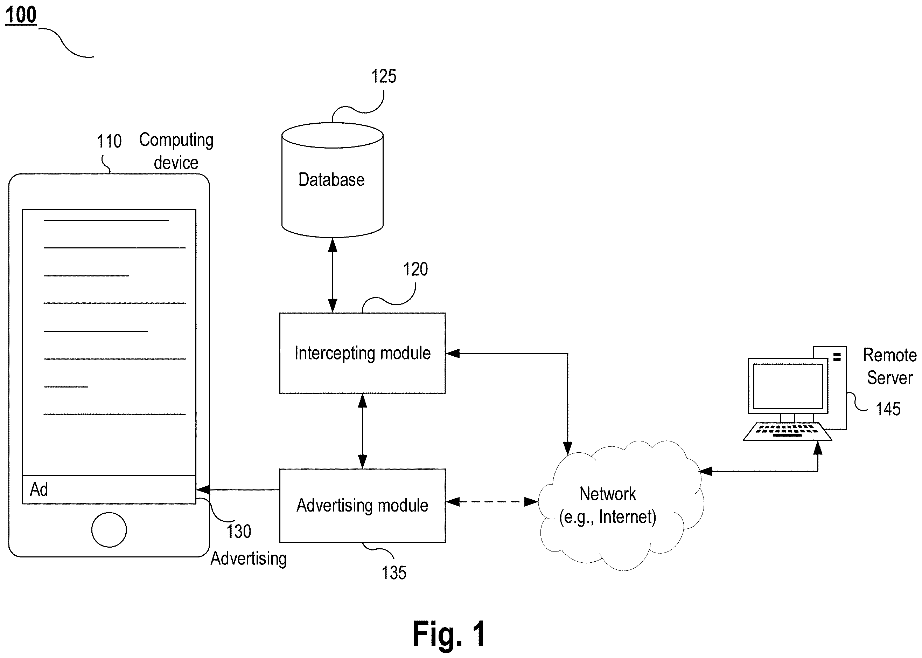

**Fig. 1** is a block diagram illustrating an exemplary system **100** for blocking information, e.g., advertising, on computing devices in accordance with aspects of the present disclosure. The system **100** for blocking advertising on computing devices includes an intercepting module **120.**

The intercepting module **120** is designed to block the displaying of unwanted information being downloaded from a remote server **145** and being displayed on the output device of a computing device **110**. For example, the unwanted information may be displayed on a screen of the computing device or a screen on a peripheral device connected to the computing device. A particular instance of such information is an advertising **130.**

It should be noted that exemplary aspects of the present disclosure shall be described in relation to advertising, but the teachings of the present disclosure are not limited solely to blocking advertising, but may be utilized for the blocking of any information the displaying of which requires the information to be downloaded from a server. It is noted that the requirement for the downloading of the information from the server necessitates DNS requests. A particular instance of the computing device **110** is a mobile computing device - a mobile telephone, a smartphone, a tablet computer, or any other portable computing device.

The computing device **110** comprises a module for displaying of the unwanted information on the screen of the computing device **110** which contains executable or interpretable codes.

In one example, the module for displaying of the unwanted information is an advertising module **135**. In the event that the computing device **110** is a mobile computing device, the advertising module **135** is an application component running on the computing device. Examples of such modules are the advertising modules based on program libraries such as: AdMob, AdSence, Firebase, iAd, and the like. In one example, when the computing device **110** is a mobile computing device, the intercepting module **120** is an application component running on the computing device. For example, when the advertising module **135** which is an application component running on the computing device (e.g., AdMob, AdSense, etc.) attempts to send a DNS request, the intercepting module **120** (which is also an application component running on the computing device **110**) intercepts the DNS request.

In one example, the advertising module **135** is an independent application. In another example, the advertising module **135** is a component of another application designed for monetization, such as an application for exchanging messages or for visiting web pages.

Without loss of generality, for the further description of the teachings of the present disclosure, the computing device **110** shall be considered a mobile computing device under the control of the iOS operating system.

For the displaying of the advertising **130,** the advertising module **135** downloads the corresponding materials (e.g., content) from a remote server **145,** which provides the materials for various advertising campaigns. The downloading of the data for display as an advertising **130** is preceded by sending a DNS request by the advertising module **135**. The DNS request is made in order to determine the IP address of the server **145** on the basis of the uniform resource locator (URL) of the server **145,** in particular the server's domain name. Thus, the problem of protecting a user (i.e., a user's device) against advertising may be interpreted as: a problem of identifying the making of a DNS request, the DNS request being for a subsequent downloading of advertising.

In one example of the present disclosure, the intercepting module **120** is used to protect the user against an advertising **130** by intercepting the DNS requests coming from the computing device **110,** i.e., DNS requests coming from an advertising module **135** of the computing device **110**. In one example, the intercepting module **120** may be realized with the aid of a DNS Proxy Provider.

As described above, the various modules, e.g., the intercepting module 120, the advertising module **135,** etc., may be applications running on the computing device **110**. As such, the hardware processor of the computing device **110,** e.g., a mobile device, is used to execute the codes of the applications, such as codes of the intercepting module **120** and the advertising module **135**.

In one example, when the DNS request is intercepted, the URL is obtained for the advertising resources residing on the server **145,** and information is obtained about the application making that request. The URL is obtained from the intercepted DNS request. Some examples of URLs obtained from an intercepted DNS request include:

- ads.mopub.com;
- ads.nexage.com;
- ad.mail.ru;
- ws.tapjoyads.com; and
- config.unityads.unity3d.com.

In one example, the information about the application includes at least the identifier of the application. For example, the information may include the name of the application, a checksum of the application, etc.

In one example, the information about the application is obtained, by the intercepting module **120,** in a form of an object NEFlowMetaData. In one example, the obtaining of the set of rules comprises selecting the set of rules from a database **125**. It is noted that the database **125** may reside within the computing device **110** or in a peripheral device. For example, if the computing device **110** is a mobile device (e.g., smartphone), the database **125** may be in a storage location within the mobile device.

Once the information about the application is obtained, the intercepting module **120** obtains a set of rules for the transmission of the DNS request based on the URL and the information obtained about the application. In other words, the set of rules is obtained based on: the URL in the intercepted DNS request, and the information about the application making the DNS request, where the information about the application including at least an identifier of the application, e.g., the name of the application, the checksum of the application, etc.

In one example, a rule of the set of rules for transmission of a DNS request contains: the information about the application making the DNS request, information on at least one URL, and at least one action prescribed by the rule regarding the DNS request. For example, the at least one action may include blocking transmission of the intercepted DNS request. The blocked action is the action associated with the rule obtained based on the information about the application.

The intercepting module **120** obtains from the database **125** a set of rules such that each selected rule of the set of rules satisfies the following conditions:

- the information about the application making the DNS request concurs with the information about the application contained in the rule for transmission of the DNS request; and
- the URL from the DNS request made by the application corresponds to the information about the URL contained in the rule for transmission of the DNS request.

In one example, the URL from the DNS request made by the application corresponds to the information about the URL contained in the rule for transmission of the DNS request when there is an exact concurrence, or covering by a mask of the URL or by a regular expression.

In one example, the information about the URL, which is stored in the rule, may constitute the URL, the mask of the URL, or the regular expression for describing the URL. The information about the URL that needs to be contained in the DNS request in order for the rule to be selected by the intercepting module **120** for a particular DNS request comprises:

- *.*ads.*.com; and
- ads.*.com.

In one example, after the selection of the rule by the intercepting module **120,** the intercepting module **120** carries out the action prescribed by the rule for transmission of the DNS request. For example, the transmission of the DNS request may be blocked.

In yet another example, the rule may further prescribe the following actions:

- display to the user a message asking whether to display or block the advertising **130;**
- on an area of the screen where the advertising **130** should be displayed, display to the user a message above it asking whether to display or block the advertising **130.**

In one example, the intercepting module **120** carries out the action prescribed by the rule when additional conditions contained in the rule for transmission of the DNS request are satisfied. In one example, the additional conditions include:

- a condition for the URL from the DNS request to correspond to the URL of an advertising server; and
- a condition for a probability of the DNS request being initiated by an action of the user of the computing device **110** being less than or equal to an established threshold, such as 80% (0.8).

In one example, the probability of the DNS request was initiated by one or more actions of the user of the computing device is determined by the following formula:

$$P = \frac{(2 * arctg\,(\sum x_i))/_\pi + 1}{2},$$

where, P represents the probability that the DNS request was initiated by the one or more actions of the user of the computing device; and

$x_i$ represents a weighting factor of one of a plurality of conditions, as described below.

Each condition of the plurality of conditions is fulfilled for certain information about the DNS request. In other words, a conditions is fulfilled for information about the URL and/or application making the DNS request. In one example, a weighting factor for a condition may take on different values.

In one example, the plurality of conditions comprises at least one of the following conditions:

(1) The URL from the DNS request does not correspond to the URL, the mask of the URL, or the regular expression of the URL of a known advertising server. Then, for example, the weighting factor may be equal to 1.

(2) The application making the DNS request is a browser. Then, for example, the weighting factor may be equal to 0.4.

(3) The application making the DNS request is a game. Then, the weighting factor may be equal to -0.5.

(4) The domain of a URL second level from the DNS request has already been visited with the aid of the application making the DNS request in a certain interval of time t prior to the present, e.g., t is 5 days. Then, the weighting factor may be equal to 0.5.

(5) The URL from the DNS request is present in many URLs associated with the application. Then, the weighting factor may be equal to 0.2.

The set of URLs associated with the application may be saved in the database **125** in such a way that each identifier of the application is placed in correspondence with one or more URL addresses, masks or regular expressions of URL addresses, the accessing of which (and also the corresponding DNS requests) is typical for the given application. The set of URLs associated with the application (i.e., the information saved in the database **125)** is stored and updated remotely by a specialist, for example, in the field of computer security. One example of a link that associates the application and the set of URLs is the application Yandex.Translator and its associated URL ad.yandex.ru.

In one example, the conditions described above and the corresponding weighting factors, may be kept in the database **125.** In one example, the conditions and the corresponding weighting factors may be stored and updated remotely in the database **125** by a specialist, for example, in the field of computer security.

In one example, the set of selected rules is used by the intercepting module **120** to carry out the actions prescribed by the rules. Furthermore, in one example, when actions are being selected among all the prescribed actions, the action of blocking the DNS request has a highest priority.

In one example, if at least one rule of the set of rules for transmission of the DNS request from the database **125** subscribes the blocking of the DNS request, then the transmission of the DNS request is blocked. Thus, if one rule of the set of rules subscribes to the blocking of the DNS request, a DNS request made by the advertising module **135** for the downloading and displaying of advertising **130** will be blocked by the intercepting module **120**.

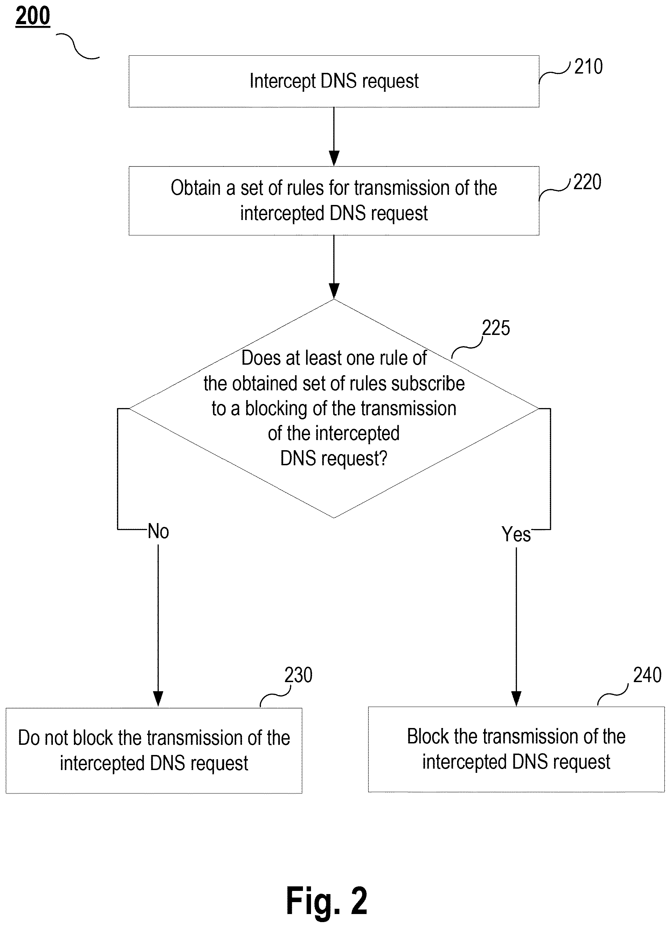

**Fig. 2** is a flow diagram illustrating an exemplary method **200** for blocking information (unwanted) from being received on a computing device in accordance with aspects of the present disclosure. For example, when the unwanted information is an advertisement, the method **200** may be used for blocking advertisement from being received on the computing device.

In step **210,** the method intercepts a DNS request. The interception of the DNS request may be performed by a hardware processor of a computing device running an application that performs the functions of the intercepting module **120,** described above. It is noted that the intercepted DNS request is associated with the information that is being blocked from being received by the computing device in accordance with the teachings of the present disclosure.

In one example, the interception of the DNS request includes an identification of an application making the DNS request, and obtaining information about one or more URLs from the DNS request. In one example, the interception of the DNS request is performed with the aid of a DNS Proxy Provider.

The intercepting module **120** is tasked with determination of the extent to which such a DNS request is characteristic of a DNS request made by the application for a DNS request made by a given advertising module, e.g., the advertising module **135.**

In step **220,** the method obtains a set of rules for a transmission of the intercepted DNS request. The obtaining of the set of rules may be performed by the intercepting module **120.** In one example, the set of rules are obtained by selecting from a database **125** on the basis of the information obtained during the interception of the DNS request. The database **125** and the intercepting module **120** may be implemented on the same device, e.g., the computing device **110.**

In one example, during the selection of the set of rules, the intercepting module **120** makes an estimation as to a probability of the intercepted DNS request being a DNS request that was initiated by one or more actions of the user. In another example, the intercepting module **120** makes an estimation as to a probability of the intercepted DNS request being characteristic of a DNS request made by an advertising module for a subsequent downloading of an advertising from a remote server. For example, the intercepting module **120** makes an estimation as to the probability of the intercepted DNS request being characteristic of a DNS request made by the advertising module **135** for a subsequent downloading of an advertising **130** from a remote server **145.**

In step **225,** the method determines whether at least one rule of the obtained set of rules subscribes to a blocking of the transmission of the intercepted DNS request. If at least on rule of the set of rules subscribes to the blocking of the transmission of the intercepted DNS request, the method proceeds to step **240.** Otherwise, the method proceeds to step **230.**

In step **230,** the method **200** does not block the transmission of the DNS request. In one example, when the method does not block the transmission of the DNS request, the DNS request is allowed to be transmitted. It is noted that the transmission of the DNS request may be blocked for other reasons, e.g., by other modules, even when it is allowed to proceed by the intercepting module **120.**

In step **240,** the method, e.g., the method **200** of the intercepting module **120,** blocks the transmission of the DNS request, wherein the blocking of the transmission of the intercepted DNS request blocks the information from being received on the computing device.

In one example, the rules for transmission of the DNS request are kept in a database, e.g., database **125.** In one example, the transmission of the DNS request is blocked when the URL of the request corresponds to a URL of a server designed to distribute unwanted information to the user. For example, the server may by designed to distribute an advertisement (e.g., the server is an advertising server), a phishing information, and so forth.

As described above, the present disclosure describes systems and methods for blocking advertising on computing devices. One advantage of the method of the present disclosure is blocking DNS requests that are not initiated by actions of the user. For example, DNS requests, e.g., made by an advertising module **135,** are prevented from being downloaded from a remote server, e.g., a remote server **145.** The characteristics of DNS requests made by the advertising module **135** are used to distinguish such requests from DNS requests initiated by the actions of the user, thereby enabling blocking of such undesired advertisements. Accordingly, the teachings of the present disclosure solve technical problems associated with the displaying of unwanted information on the output device of a user's computing device, especially advertising. The technical result is achieved by blocking the downloading of advertising, e.g., advertising **130** (generally, advertising data) onto the computing device of the user **110.**

**Fig. 3** is a block diagram illustrating a computer system 20 on which aspects of systems and methods for blocking advertising on computing devices may be implemented in accordance with an exemplary aspect. It should be noted that the computer system 20 can correspond to a virtual machine on a computing device, for example, as described earlier the intercepting module may be deployed on a virtual machine. The computer system 20 can be in the form of multiple computing devices, or in the form of a single computing device, for example, a desktop computer, a notebook computer, a laptop computer, a mobile computing device, a smart phone, a tablet computer, a server, a mainframe, an embedded device, and other forms of computing devices.

As shown, the computer system 20 includes a central processing unit (CPU) 21, a system memory 22, and a system bus 23 connecting the various system components, including the memory associated with the central processing unit 21. The system bus 23 may comprise a bus memory or bus memory controller, a peripheral bus, and a local bus that is able to interact with any other bus architecture. Examples of the buses may include PCI, ISA, PCI-Express, HyperTransport™, InfiniBand™, Serial ATA, I²C, and other suitable interconnects. The central processing unit 21 (also referred to as a processor) can include a single or multiple sets of processors having single or multiple cores. The processor 21 may execute one or more computer-executable code implementing the techniques of the present disclosure. The system memory 22 may be any memory for storing data used herein and/or computer programs that are executable by the processor 21. The system memory 22 may include volatile memory such as a random access memory (RAM) 25 and non-volatile memory such as a read only memory (ROM) 24, flash memory, etc., or any combination thereof. The basic input/output system (BIOS) 26 may store the basic procedures for transfer of information between elements of the computer system 20, such as those at the time of loading the operating system with the use of the ROM 24.

The computer system 20 may include one or more storage devices such as one or more removable storage devices 27, one or more non-removable storage devices 28, or a combination thereof. The one or more removable storage devices 27 and non-removable storage devices 28 are connected to the system bus 23 via a storage interface 32. In an example, the storage devices and the corresponding computer-readable storage media are power-independent modules for the storage of computer instructions, data structures, program modules, and other data of the computer system 20. The system memory 22, removable storage devices 27, and non-removable storage devices 28 may use a variety of computer-readable storage media. Examples of computer-readable storage media include machine memory such as cache, SRAM, DRAM, zero capacitor RAM, twin transistor RAM, eDRAM, EDO RAM, DDR RAM, EEPROM, NRAM, RRAM, SONOS, PRAM; flash memory or other memory technology such as in solid state drives (SSDs) or flash drives; magnetic cassettes, magnetic tape, and magnetic disk storage such as in hard disk drives or floppy disks; optical storage such as in compact disks (CD-ROM) or digital versatile disks (DVDs); and any other medium which may be used to store the desired data and which can be accessed by the computer system 20.

The system memory 22, removable storage devices 27, and non-removable storage devices 28 of the computer system 20 may be used to store an operating system 35, additional program applications 37, other program modules 38, and program data 39. The computer system 20 may include a peripheral interface 46 for communicating data from input devices 40, such as a keyboard, mouse, stylus, game controller, voice input device, touch input device, or other peripheral devices, such as a printer or scanner via one or more I/O ports, such as a serial port, a parallel port, a universal serial bus (USB), or other peripheral interface. A display device 47 such as one or more monitors, projectors, or integrated display, may also be connected to the system bus 23 across an output interface 48, such as a video adapter. In addition to the display devices 47, the computer system 20 may be equipped with other peripheral output devices (not shown), such as loudspeakers and other audiovisual devices

The computer system 20 may operate in a network environment, using a network connection to one or more remote computers 49. The remote computer (or computers) 49 may be local computer workstations or servers comprising most or all of the aforementioned elements in describing the nature of a computer system 20. Other devices may also be present in the computer network, such as, but not limited to, routers, network stations, peer devices or other network nodes. The computer system 20 may include one or more network interfaces 51 or network adapters for communicating with the remote computers 49 via one or more networks such as a local-area computer network (LAN) 50, a wide-area computer network (WAN), an intranet, and the Internet. Examples of the network interface 51 may include an Ethernet interface, a Frame Relay interface, SONET interface, and wireless interfaces.

Aspects of the present disclosure may be a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store program code in the form of instructions or data structures that can be accessed by a processor of a computing device, such as the computing system 20. The computer readable storage medium may be an electronic storage device, a magnetic storage device, an optical storage device, an electromagnetic storage device, a semiconductor storage device, or any suitable combination thereof. By way of example, such computer-readable storage medium can comprise a random access memory (RAM), a read-only memory (ROM), EEPROM, a portable compact disc read-only memory (CD-ROM), a digital versatile disk (DVD), flash memory, a hard disk, a portable computer diskette, a memory stick, a floppy disk, or even a mechanically encoded device such as punch-cards or raised structures in a groove having instructions recorded thereon. As used herein, a computer readable storage medium is not to be construed as being transitory signals per se, such as radio waves or other freely propagating electromagnetic waves, electromagnetic waves propagating through a waveguide or transmission media, or electrical signals transmitted through a wire.

Computer readable program instructions described herein can be downloaded to respective computing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network interface in each computing device receives computer readable program instructions from the network and forwards the computer readable program instructions for storage in a computer readable storage medium within the respective computing device.

Computer readable program instructions for carrying out operations of the present disclosure may be assembly instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or WAN, or the connection may be made to an external computer (for example, through the Internet). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

In various aspects, the systems and methods described in the present disclosure can be addressed in terms of modules. The term "module" as used herein refers to a real-world device, component, or arrangement of components implemented using hardware, such as by an application specific integrated circuit (ASIC) or FPGA, for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a computer system (such as the one described in greater detail in **Fig. 3,** above). Accordingly, each module may be realized in a variety of suitable configurations, and should not be limited to any particular implementation exemplified herein.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of those skilled in the relevant art(s). Moreover, it is not intended for any term in the specification or claims to be ascribed an uncommon or special meaning unless explicitly set forth as such.

The various aspects disclosed herein encompass present and future known equivalents to the known modules referred to herein by way of illustration. Moreover, while aspects and applications have been shown and described, it would be apparent to those skilled in the art having the benefit of this disclosure that many more modifications than mentioned above are possible without departing from the scope of the appended claims.

## Claims

1.  A method (200) for blocking information from being received on a computing device (110), the method (200) comprising:

    intercepting (210), by a processor of the computing device (110), a Domain Name System, DNS, request, the intercepted DNS request being associated with the information being blocked from the computing device (110), wherein the interception of the DNS request includes at least one of: an identifier of an application making the DNS request, and obtaining information about one or more Universal Resource Locators, URLs, from the DNS request; obtaining (220), by the processor of the computing device (110), a set of rules for a transmission of the intercepted DNS request, wherein the obtaining of the set of rules comprises selecting the set of rules from a database (125) based on the one or more URLs in the intercepted DNS request and information about the application making the DNS request, wherein the information about the application includes at least the identifier of the application, and wherein in each selected rule of the set of rules: the information about the application making the DNS request corresponds to information about an the application contained in the selected rule and the URL from the intercepted DNS request made by the application corresponds to information about a URL contained in the selected rule; determining (225), by the processor of the computing device (110), whether at least one rule of the obtained set of rules subscribes to a blocking of the transmission of the intercepted DNS request; and

blocking (240), by the processor of the computing device (110), the transmission of the intercepted DNS request when at least one rule of the set of rules subscribes to the blocking of the transmission of the intercepted DNS request, wherein the blocking of the transmission of the intercepted DNS request blocks the information from being received on the computing device (110),

wherein the obtaining of the set of rules further comprises:

estimating a probability of the intercepted DNS request having a characteristic of DNS request made for downloading of advertising information from a remote server (145) and

wherein the blocking the transmission of the intercepted DNS request further comprises selectively blocking the transmission of the intercepted DNS request based on the estimated probability.

2. The method (200) according to claim 1, wherein the obtaining of the set of rules further comprises:

estimating a probability of the intercepted DNS request being a DNS request that was initiated by one or more actions of a user and wherein the blocking the transmission of the intercepted DNS request further comprises selectively blocking the transmission of the intercepted DNS request based on the estimated probability.

3. The method (200) according to any of claims 1 to 2, wherein the interception of the DNS request is performed using a DNS proxy provider.

4. A system (100) for blocking information from being received on a computing device (110), comprising: at least one processor of the computing device (110) configured to:

intercept (210) a Domain Name System, DNS, request, the intercepted DNS request being associated with the information being blocked from the computing device (110), wherein the interception of the DNS request includes at least one of: an identifier of an application making the DNS request, and obtaining information about one or more Universal Resource Locators, URLs, from the DNS request;

obtain (220) a set of rules for a transmission of the intercepted DNS request, wherein the configuration for obtaining of the set of rules comprises a configuration for selecting the set of rules from a database based on one or more Universal Resource Locators, URLs, in the intercepted DNS request and information about the application making the DNS request, wherein the information about the application includes at least the identifier of the application, and wherein in each selected rule of the set of rules: the information about the application making the DNS request corresponds to information about an application contained in the selected rule and the URL from the intercepted DNS request made by the application corresponds to information about a URL contained in the selected rule; determine (225) whether at least one rule of the obtained set of rules subscribes to a blocking of the transmission of the intercepted DNS request; and

block (240) the transmission of the intercepted DNS request when at least on rule of the set of rules subscribes to the blocking of the transmission of the intercepted DNS request, wherein the blocking of the transmission of the intercepted DNS request blocks the information from being received on the computing device (110), wherein the configuration for obtaining of the set of rules further comprises a configuration for: estimating a probability of the intercepted DNS request having a characteristic of a DNS request made for downloading of advertising information from a remote server (145) and wherein the configuration for blocking the transmission of the DNS request comprises a configuration for selectively blocking the transmission of the intercepted DNS request based on the estimated probability.

5. The system (100) according to claim 4, wherein the configuration for obtaining of the set of rules further comprises a configuration for:
estimating a probability of the intercepted DNS request being a DNS request that was initiated by one or more actions of a user and wherein the configuration for blocking the transmission of the DNS request comprises a configuration for selectively blocking the transmission of the intercepted DNS request based on the estimated probability.

6. The system (100) according to any of claims 4 to 5, wherein the interception of the DNS request is performed using a DNS proxy provider.

**Patentansprüche**

1. Verfahren (200) zum Blockieren eines Empfangs von Informationen auf einer Rechenvorrichtung (110), wobei das Verfahren (200) umfasst:
Abfangen (210), durch einen Prozessor der Rechenvorrichtung (110), einer Domain Name System, DNS,-Anfrage, wobei die abgefangene DNS-Anfrage mit den Informationen verknüpft ist, die von der Rechenvorrichtung (110) blockiert werden, wobei das Abfangen der DNS-Anfrage zumindest eines von beinhaltet:

eine Kennung einer Anwendung, die die DNS-Anfrage stellt, und Erhalt von Informationen über einen oder mehrere Universal Resource Locators, URLs, von der DNS-Anfrage;
Erhalten (220), durch den Prozessor der Rechenvorrichtung (110), eines Satzes von Regeln für eine Übertragung der abgefangenen DNS-Anfrage, wobei das Erhalten des Satzes von Regeln ein Auswählen des Satzes von Regeln aus einer Datenbank (125) basierend auf der einen oder den mehreren URLs in der abgefangenen DNS-Anfrage und Informationen über die Anwendung umfasst, die die DNS-Anfrage stellt, wobei die Informationen über die Anwendung zumindest die Kennung der Anwendung beinhalten, und wobei in jeder ausgewählten Regel des Satzes von Regeln: die Informationen über die Anwendung, die die DNS-Anfrage stellt, Informationen über eine Anwendung entsprechen, die in der ausgewählten Regel enthalten sind, und die URL von der abgefangenen DNS-Anfrage, die von der Anwendung gestellt wird, Informationen über eine URL entspricht, die in der ausgewählten Regel enthalten ist;
Bestimmen (225), durch den Prozessor der Rechenvorrichtung (110), ob zumindest eine Regel des erhaltenen Satzes von Regeln eine Blockierung der Übertragung der abgefangenen DNS-Anfrage abonniert; und
Blockieren (240), durch den Prozessor der Rechenvorrichtung (110), der Übertragung der abgefangenen DNS-Anfrage, wenn zumindest eine Regel des Satzes von Regeln das Blockieren der Übertragung der abgefangenen DNS-Anfrage abonniert, wobei das Blockieren der Übertragung der abgefangenen DNS-Anfrage den Empfang der Informationen auf der Rechenvorrichtung (110) blockiert,
wobei das Erhalten des Satzes von Regeln ferner umfasst:

Schätzen einer Wahrscheinlichkeit, mit der die abgefangene DNS-Anfrage eine Charakteristik einer DNS-Anfrage aufweist, die zum Herunterladen von Werbeinformationen von einem entfernten Server (145) gestellt wird, und
wobei das Blockieren der Übertragung der abgefangenen DNS-Anfrage ferner ein selektives Blockieren der Übertragung der abgefangenen DNS-Anfrage basierend auf der geschätzten Wahrscheinlichkeit umfasst.

2. Verfahren (200) nach Anspruch 1, wobei das Erhalten des Satzes von Regeln ferner umfasst:

Schätzen einer Wahrscheinlichkeit, mit der die abgefangene DNS-Anfrage eine DNS-Anfrage ist, die durch eine oder mehrere Aktionen eines Benutzers initiiert wurde, und
wobei das Blockieren der Übertragung der abgefangenen DNS-Anfrage ferner ein selektives Blockieren der Übertragung der abgefangenen DNS-Anfrage basierend auf der geschätzten Wahrscheinlichkeit umfasst.

3. Verfahren (200) nach einem der Ansprüche 1 bis 2, wobei das Abfangen der DNS-Anfrage unter Verwendung eines DNS-Proxy-Providers durchgeführt wird.

4. System (100) zum Blockieren eines Empfangs von Informationen auf einer Rechenvorrichtung (110), umfassend:
zumindest einen Prozessor der Rechenvorrichtung (110), der konfiguriert ist zum:

Abfangen (210) einer Domain Name System, DNS,-Anfrage, wobei die abgefangene DNS-Anfrage mit den Informationen verknüpft ist, die von der Rechenvorrichtung (110) blockiert werden, wobei das Abfangen der DNS-Anfrage zumindest eines von beinhaltet: eine Kennung einer Anwendung, die die DNS-Anfrage stellt, und Erhalt von Informationen über einen oder mehrere Universal Resource Locators, URLs, von der DNS-Anfrage;

Erhalten (220) eines Satzes von Regeln für eine Übertragung der abgefangenen DNS-Anfrage, wobei die Konfiguration zum Erhalten des Satzes von Regeln eine Konfiguration zum Auswählen des Satzes von Regeln aus einer Datenbank basierend auf einem oder mehreren Universal Resource Locators, URLs, in der abgefangenen DNS-Anfrage und Informationen über die Anwendung umfasst, die die DNS-Anfrage stellt, wobei die Informationen über die Anwendung zumindest die Kennung der Anwendung beinhalten, und wobei in jeder ausgewählten Regel des Satzes von Regeln: die Informationen über die Anwendung, die die DNS-Anfrage stellt, Informationen über eine Anwendung entsprechen, die in der ausgewählten Regel enthalten sind, und die URL von der abgefangenen DNS-Anfrage, die von der Anwendung gestellt wird, Informationen über eine URL entspricht, die in der ausgewählten Regel enthalten ist;

Bestimmen (225), ob zumindest eine Regel des erhaltenen Satzes von Regeln eine Blockierung der Übertragung der abgefangenen DNS-Anfrage abonniert; und

Blockieren (240) der Übertragung der abgefangenen DNS-Anfrage, wenn zumindest eine Regel des Satzes von Regeln das Blockieren der Übertragung der abgefangenen DNS-Anfrage abonniert, wobei das Blockieren der Übertragung der abgefangenen DNS-Anfrage den Empfang der Informationen auf der Rechenvorrichtung (110) blockiert,

wobei die Konfiguration zum Erhalten des Satzes von Regeln ferner eine Konfiguration umfasst zum:

Schätzen einer Wahrscheinlichkeit, mit der die abgefangene DNS-Anfrage eine Charakteristik einer DNS-Anfrage aufweist, die zum Herunterladen von Werbeinformationen von einem entfernten Server (145) gestellt wird, und wobei die Konfiguration zum Blockieren der Übertragung der abgefangenen DNS-Anfrage eine Konfiguration zum selektiven Blockieren der Übertragung der abgefangenen DNS-Anfrage basierend auf der geschätzten Wahrscheinlichkeit umfasst.

5. System (100) nach Anspruch 4, wobei die Konfiguration zum Erhalten des Satzes von Regeln ferner eine Konfiguration umfasst zum:
Schätzen einer Wahrscheinlichkeit, mit der die abgefangene DNS-Anfrage eine DNS-Anfrage ist, die durch eine oder mehrere Aktionen eines Benutzers initiiert wurde, und wobei die Konfiguration zum Blockieren der Übertragung der abgefangenen DNS-Anfrage eine Konfiguration zum selektiven Blockieren der Übertragung der abgefangenen DNS-Anfrage basierend auf der geschätzten Wahrscheinlichkeit umfasst.

6. System (100) nach einem der Ansprüche 4 bis 5, wobei das Abfangen der DNS-Anfrage unter Verwendung einen DNS-Proxy-Providers durchgeführt wird.

**Revendications**

1. Procédé (200) pour bloquer la réception d'informations sur un dispositif informatique (110), le procédé (200) comprenant les étapes consistant à :

intercepter (210), par un processeur du dispositif informatique (110), une requête de système de noms de domaine, DNS, la requête DNS interceptée étant associée aux informations qui sont bloquées sur le dispositif informatique (110), l'interception de la requête DNS comportant au moins un élément parmi : un identificateur d'une application faisant la requête DNS, et l'obtention d'informations sur un ou plusieurs localisateurs de ressources uniformes, URL, à partir de la requête DNS ;
obtenir (220), par le processeur du dispositif informatique (110), un ensemble de règles de transmission de la requête DNS interceptée, où l'obtention de l'ensemble de règles comprend la sélection de l'ensemble de règles à partir d'une base de données (125) sur la base du ou des URL dans la requête DNS interceptée et d'informations sur l'application faisant la requête DNS, où les informations sur l'application comportent au moins l'identificateur de l'application, et où, dans chaque règle sélectionnée de l'ensemble de règles : les informations sur l'application faisant la requête DNS correspondent à des informations sur une application contenue dans la règle sélectionnée, et l'URL provenant de la requête DNS interceptée faite par l'application correspond à des informations sur un URL contenu dans la règle sélectionnée ;
déterminer (225), par le processeur du dispositif informatique (110), si au moins une règle de l'ensemble de règles obtenu souscrit à un blocage de la transmission de la requête DNS interceptée ; et
bloquer (240), par le processeur du dispositif informatique (110), la transmission de la requête DNS interceptée lorsqu'au moins une règle de l'ensemble de règles souscrit au blocage de la transmission de la requête DNS interceptée, le blocage de la transmission de la requête DNS interceptée bloquant la réception des informations sur le dispositif informatique (110),

dans lequel l'obtention de l'ensemble de règles comprend en outre l'étape consistant à :

estimer une probabilité que la requête DNS interceptée ait une caractéristique de requête DNS faite pour le téléchargement d'informations de publicité à partir d'un serveur distant (145), et

dans lequel le blocage de la transmission de la requête DNS interceptée comprend en outre le blocage sélectif de la transmission de la requête DNS interceptée sur la base de la probabilité estimée.

**2.** Procédé (200) selon la revendication 1, dans lequel l'obtention de l'ensemble de règles comprend en outre l'étape consistant à :

estimer une probabilité que la requête DNS interceptée soit une requête DNS qui a été initiée par une ou plusieurs actions d'un utilisateur et dans lequel le blocage de la transmission de la requête DNS interceptée comprend en outre le blocage sélectif de la transmission de la requête DNS interceptée sur la base de la probabilité estimée.

**3.** Procédé (200) selon l'une quelconque des revendications 1 à 2, dans lequel l'interception de la requête DNS est réalisée en utilisant un fournisseur de proxy DNS.

**4.** Système (100) pour bloquer la réception d'informations sur un dispositif informatique (110), comprenant :
au moins un processeur du dispositif informatique (110) configuré pour :

intercepter (210) une requête de système de noms de domaine, DNS, la requête DNS interceptée étant associée aux informations qui sont bloquées par le dispositif informatique (110), l'interception de la requête DNS comportant au moins un élément parmi : un identificateur d'une application faisant la requête DNS, et l'obtention d'informations sur un ou plusieurs localisateurs uniformes de ressources, URL, à partir de la requête DNS ;

obtenir (220) un ensemble de règles de transmission de la requête DNS interceptée, où la configuration pour l'obtention de l'ensemble de règles comprend une configuration pour sélectionner l'ensemble de règles à partir d'une base de données, sur la base d'un ou plusieurs localisateurs uniformes de ressources, URL, dans la requête DNS interceptée, et des informations sur l'application faisant la requête DNS, les informations sur l'application comportant au moins l'identificateur de l'application, et où, dans chaque règle sélectionnée de l'ensemble de règles : les informations sur l'application faisant la requête DNS correspondent à des informations sur une application contenue dans la règle sélectionnée, et l'URL provenant de la requête DNS interceptée faite par l'application correspond à des informations sur un URL contenu dans la règle sélectionnée ;

déterminer (225) si au moins une règle de l'ensemble de règles obtenu souscrit à un blocage de la transmission de la requête DNS interceptée ; et

bloquer (240) la transmission de la requête DNS interceptée lorsqu'au moins une règle de l'ensemble de règles souscrit au blocage de la transmission de la requête DNS interceptée, le blocage de la transmission de la requête DNS interceptée bloquant la réception des informations sur le dispositif informatique (110),

dans lequel la configuration d'obtention de l'ensemble de règles comprend en outre une configuration pour :

estimer une probabilité que la requête DNS interceptée ait une caractéristique d'une requête DNS faite pour le téléchargement d'informations de publicité à partir d'un serveur distant (145), et la configuration pour le blocage de la transmission de la requête DNS comprenant une configuration pour le blocage sélectif de la transmission de la requête DNS interceptée sur la base de la probabilité estimée.

**5.** Système (100) selon la revendication 4, dans lequel la configuration pour l'obtention de l'ensemble de règles comprend en outre une configuration pour : estimer une probabilité que la requête DNS interceptée soit une requête DNS qui a été initiée par une ou plusieurs actions d'un utilisateur, et dans lequel la configuration pour le blocage de la transmission de la requête DNS comprend une configuration pour le blocage sélectif de la transmission de la requête DNS interceptée sur la base de la probabilité estimée.

**6.** Système (100) selon l'une quelconque des revendications 4 à 5, dans lequel l'interception de la requête DNS est réalisée en utilisant un fournisseur de proxy DNS.

Fig. 1

**200**

Intercept DNS request — 210

Obtain a set of rules for transmission of the intercepted DNS request — 220

Does at least one rule of the obtained set of rules subscribe to a blocking of the transmission of the intercepted DNS request? — 225

No

Yes

Do not block the transmission of the intercepted DNS request — 230

Block the transmission of the intercepted DNS request — 240

# Fig. 2

Fig. 3

EP 3 694 188 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008209057 A1
- KR 20180040390 A
- US 2016099961 A1